# FASCICULE DE BREVET EUROPEEN

(11) **EP 3 303 045 B1**
(45) Date de publication et mention de la délivrance du brevet: **27.03.2019**
(21) Numéro de dépôt: 16727717.7
(22) Date de dépôt: 08.06.2016
(51) Int. Cl.: B60L 5/42, B60L 11/18

(54) **ENSEMBLE CONSTITUÉ D'UN VÉHICULE ÉLECTRIQUE ET D'UN SYSTÈME DE RECHARGE STATIONNAIRE PAR CONDUCTION; SYSTÈME, INSTALLATION, VÉHICULE ET PROCÉDÉ ASSOCIÉS**
EINHEIT BESTEHEND AUS EINEM ELEKTRISCHEN FAHRZEUG UND AUS EINEM STATIONÄREN AUFLADUNGSYSTEM DURCH STROMLEITUNG; VERBUNDENE SYSTEM, EINRICHTUNG, FAHRZEUG UND VERFAHREN
SET CONSTITUTED FROM AN ELECTRIC VEHICLE AND A STATONARY LOADING SYSTEM PER CONDUCTION; CORRESPONDING SYSTEM, INSTALLATION, VEHICLE AND PROCESS

(30) Priorité: 08.06.2015 FR 1555205
(43) Date de publication de la demande: 11.04.2018
(73) Titulaire: ALSTOM Transport Technologies, 93400 Saint-Ouen (FR)
(72) Inventeur: HOURTANE, Jean-Luc, 13320 Bouc Bel Air (FR); CHAINTRON, Yann, 13127 Vitrolles (FR)
(74) Mandataire: Lavoix
(86) Numéro de dépôt international: PCT/EP2016/063057
(87) Numéro de publication internationale: WO 2016/198465

(56) Documents cités:
- EP-A2- 2 524 836
- DE-A1- 2 330 255
- FR-A1- 2 966 397

## Description

L'invention a pour domaine celui des systèmes de recharge stationnaires par conduction d'un véhicule électrique.

Dans le présent document, si le mode de réalisation décrit ci-après en détail est relatif à un véhicule électrique qui est un tramway, l'invention ne se limite pas à ce type particulier de véhicule électrique, mais est applicable à tous les types de véhicules électriques, guidés ou non guidés, tels que métros, camions, automobiles, autobus, etc.

Différents systèmes sont connus pour l'alimentation d'un véhicule électrique afin de lui fournir une puissance électrique, soit utilisée directement par des moyens de propulsion du véhicule, soit stockée dans des moyens de stockage d'énergie du véhicule.

On connaît ainsi des systèmes de recharge dynamiques qui permettent l'alimentation du véhicule électrique alors qu'il se déplace. Pour un véhicule tel qu'un tramway, l'exemple d'un tel système dynamique est constitué par un système d'alimentation par le toit, par exemple du type par caténaire. Pour un véhicule tel qu'une voiture, il a été proposé des chaussées intégrant une piste conductrice, portée à un potentiel d'alimentation. La voiture comporte un moyen de captage du courant en contact de la piste conductrice tout au long du déplacement du véhicule.

On connaît aussi des systèmes de recharge statiques, qui permettent la recharge des moyens de stockage d'énergie du véhicule lorsque celui-ci est à l'arrêt.

Si l'arrêt est prolongé, on parlera d'un système de recharge fixe. Pour le cas d'une voiture électrique, il s'agit par exemple de garer le véhicule sur une place de parking spécifique située à proximité d'une borne électrique reliée au secteur. Au moyen d'un simple câble électrique prévu sur la voiture et muni d'un connecteur adapté, les moyens de stockage d'énergie de la voiture sont connectés électriquement à la borne pour être rechargés. Avec ces systèmes fixes, les temps de recharge sont longs : plusieurs heures pour une recharge complète des batteries d'un véhicule léger, tel qu'une voiture de tourisme. Le véhicule est par conséquent indisponible pendant plusieurs heures. Il est donc stoppé au cours de la recharge, au sens où son moteur est coupé et qu'il n'est pas en état de marche immédiate. Les puissances d'alimentation fournies par de tels systèmes fixes sont relativement faibles, puisque l'énergie nécessaire à la recharge du véhicule est captée pendant un temps de recharge long.

Si l'arrêt est court, de l'ordre de quelques dizaines de secondes, on parlera d'un système de recharge stationnaire. Un tel système est propre à transférer, du sol vers le véhicule électrique, une puissance relativement importante, comparée aux systèmes dynamiques ou aux systèmes statiques fixes. La recharge étant rapide et l'arrêt court, le véhicule reste dans un état de marche : sa vitesse est nulle, mais il est prêt à accélérer immédiatement pour quitter la position de captage du courant électrique.

Parmi les systèmes stationnaires, on connaît les systèmes de recharge par induction. Le véhicule est muni d'un induit qui est placé, lorsque la voiture arrive sur un emplacement de captage, au-dessus d'une bobine, prévue sous la surface du sol. Le flux du champ magnétique généré par la bobine est alors propre à générer dans l'induit, un courant permettant de recharger les batteries du véhicule.

Cependant, de tels systèmes de recharge stationnaires par induction ne permettent pas de fournir une puissance suffisante pour recharger un véhicule électrique lourd, tel qu'un tramway, un camion, etc. ou de garantir un temps d'arrêt court pour la recharge complète des moyens de stockage d'énergie d'un véhicule léger.

Par ailleurs, les systèmes par induction génèrent des champs magnétiques importants dans le voisinage du véhicule au cours de la recharge. L'impact sur la santé des champs magnétiques n'est pas encore bien connu.

Par ailleurs, le document DE 2330255 A1 divulgue un système de recharge stationnaire par conduction, dans lequel un plot est déplacé pour venir en contact d'un contact adapté prévu sous la caisse du véhicule électrique pour sa recharge.

L'invention a donc pour but de proposer un système de recharge stationnaire par conduction, alternatif aux systèmes connus, permettant notamment un transfert de puissance plus important que les systèmes de recharge stationnaires par induction, présentant un coût de déploiement réduit, et présentant un niveau de sécurité élevé pour les personnes se trouvant autour du véhicule au moment de sa recharge.

L'invention a donc pour objet un ensemble constitué d'un véhicule électrique et d'un système de recharge, un système de recharge, une installation d'alimentation d'un véhicule électrique, un véhicule ferroviaire et un procédé d'utilisation conformes aux revendications.

L'invention sera mieux comprise et d'autres caractéristiques, buts et avantages de celle-ci apparaîtront plus clairement à l'aide de la description qui va suivre, d'un mode de réalisation particulier de l'invention, donné uniquement à titre illustratif et non limitatif, cette description étant faite en référence aux dessins annexés, sur lesquels :
- la figure 1 est une représentation schématique d'une ligne de circulation d'un tramway, dont les différentes stations sont équipées de systèmes de recharge stationnaires par conduction selon l'invention ;
- la figure 2 est une représentation schématique d'une paire de systèmes de recharge stationnaires selon l'invention équipant l'un des quais d'une station de la figure 1, un tramway étant arrêté dans une position prédéterminée permettant le transfert d'énergie électrique du sol vers le bord ;
- la figure 3 est une représentation schématique en coupe du tramway de la figure 2, au niveau d'un plot d'alimentation d'un des deux systèmes de recharge stationnaires ; et,
- la figure 4 est une représentation schématique des différentes étapes du procédé de recharge d'un véhicule électrique au moyen du système de recharge stationnaire, selon l'invention.

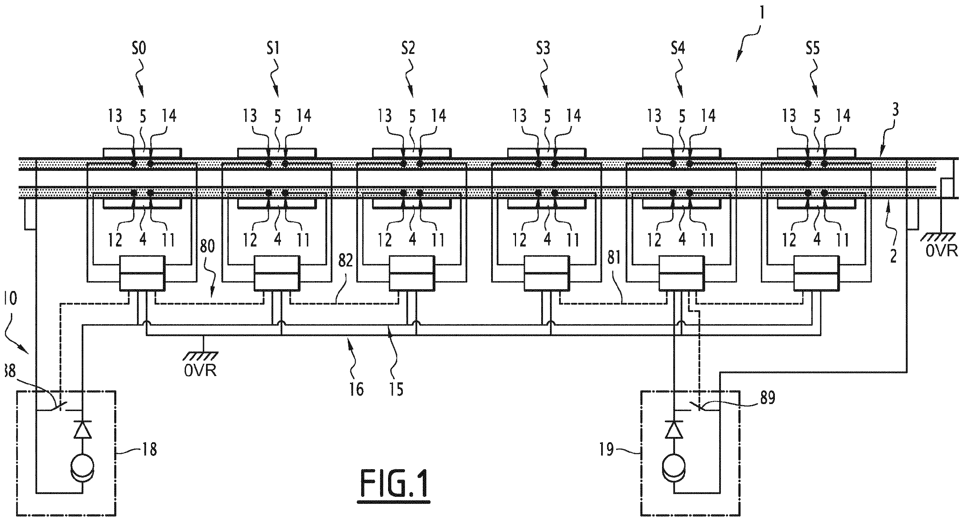

La figure 1 représente schématiquement une ligne 1 de tramway, comportant par exemple une première voie 2, pour le trajet aller, et une seconde voie 3, pour le trajet retour, qui permettent à des tramways de circuler entre des stations d'extrémité S0 et S5, en passant par des stations intermédiaires. Sur la figure 1, quatre stations intermédiaires S1, S2, S3 et S4 sont représentées.

Dans le mode de réalisation de la figure 1, chaque station comporte deux quais. Le premier quai 4 d'une station permet le transfert de passagers avec un tramway circulant sur la première voie 2 et arrêté à la station considérée. Le second quai 5 d'une station permet le transfert de passagers avec un tramway circulant sur la seconde voie 3 et arrêté à la station considérée.

La ligne 1 est équipée d'une installation 10 de recharge par le sol, comportant une pluralité de systèmes de recharges stationnaires par conduction, situés en station et permettant aux tramways de capter une énergie électrique lorsqu'il est arrêté en station. L'installation 10 comporte également un réseau d'alimentation 15 et une ou plusieurs sous-station(s) d'alimentation, 18, 19, constituant, pour les systèmes de recharge, une source de puissance électrique.

Dans le mode de réalisation décrit ici en détail, l'installation de recharge par le sol permet l'alimentation des tramways sur la totalité de la ligne. En variante, l'installation de recharge par le sol est dédiée à l'alimentation des tramways sur une section seulement de la ligne. Cette section est encadrée par des sections équipées de leur propre installation d'alimentation, par exemple une installation de recharge par le sol, ou une installation de recharge par caténaire, ou encore une installation de recharge mixte, c'est-à-dire par caténaire et par le sol.

Le quai de chaque station est équipé d'une paire de systèmes de recharge stationnaires par conduction. Chaque système permet le transfert d'une puissance électrique depuis le sol vers un tramway arrêté le long du quai considéré, pendant une durée correspondant sensiblement au temps de transfert des passagers, c'est-à-dire typiquement entre cinq et cinquante secondes.

La présence de deux systèmes de recharge par quai permet une redondance, de nature à garantir, en cas de panne de l'un des deux systèmes de recharge, qu'un tramway pourra être rechargé en utilisant l'autre système de recharge. On assure ainsi une disponibilité élevée de l'installation 10, tout au long du déplacement des tramways.

Ainsi, comme représenté sur la figure 1, par exemple pour la station S1, le premier quai 4 est équipé d'un premier système de recharge avant 11 et d'un premier système de recharge arrière 12, et le second quai 5 est équipé d'un second système de recharge avant 13 et d'un second système de recharge arrière 14. Les qualificatifs d'avant et d'arrière sont définis par rapport au sens de circulation des tramways sur la voie considérée.

Les systèmes de recharge étant identiques entre eux, sauf mention contraire, la description sera faite en omettant les qualificatifs de premier et second ou avant et arrière et en se référant plus particulièrement au premier système de recharge avant 11.

Le réseau d'alimentation 15, dans le mode de réalisation décrit ici en détail, est monophasé. Il comporte un câble de phase au potentiel d'alimentation

Le réseau d'alimentation 15 est par exemple connecté à deux sous-stations d'alimentation 18 et 19. La première sous-station 18 est prévue au niveau de la station S0 alors que la seconde sous-station 19 est prévue au niveau de la station S4. Une sous-station constitue une interface de raccordement de l'installation 10 au réseau général d'un fournisseur d'électricité. Une sous-station permet la mise en forme du courant nécessaire à la recharge des tramways.

Alors que l'une des bornes de chaque sous-station est connectée au réseau 15, l'autre borne est connectée à au moins l'un des rails de roulement de la voie, c'est-à-dire à un potentiel de référence, dénommé « zéro volt rail » ou 0 VR dans ce qui suit. Le potentiel de référence est proche du potentiel de terre.

Le câble de référence 16 est également au potentiel de référence. Pour ce faire il est régulièrement connecté à au moins un rail de roulement de la voie, par des câbles de liaison 17.

L'installation 10 est propre à appliquer une tension entre 600 et 1000 V, de préférence de 750 V, correspondant à l'écart entre les potentiels d'alimentation et de référence. Compte tenu d'un temps d'arrêt de quelques dizaines de secondes, un système de recharge délivre une puissance de l'ordre de 1 MW.

De nombreuses variantes du réseau d'alimentation et des sources de l'installation sont envisageables.

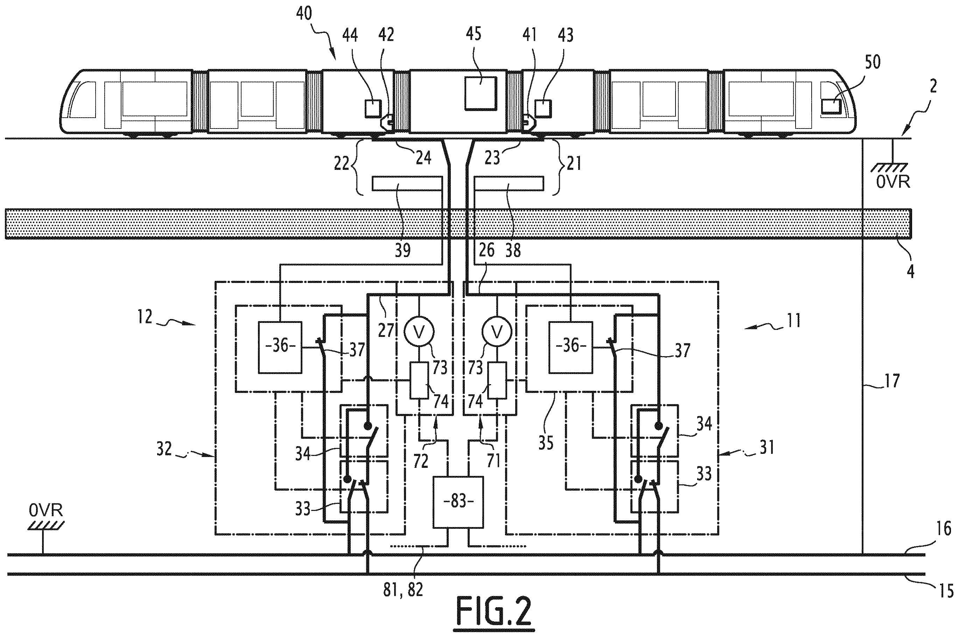

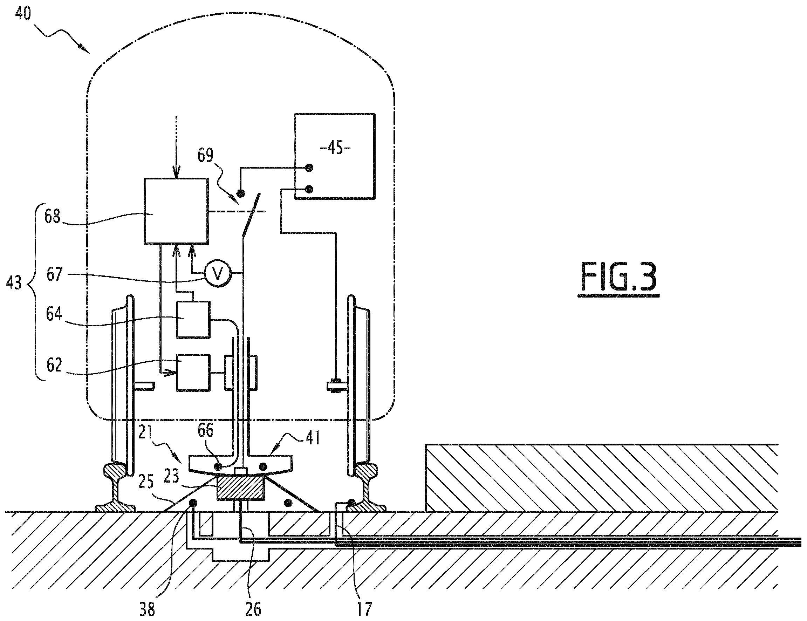

En se référant maintenant aux figures 2 et 3, un système de recharge et un véhicule électrique propre à fonctionner avec ce système vont être décrits.

De manière générale, un système de recharge stationnaire par conduction comporte un plot d'alimentation, implanté sur le sol de la voie, entre les fils de rails.

Le système comporte également, dans un boîtier sur le bas-côté de la voie, un dispositif de commutation, permettant de connecter le plot d'alimentation au potentiel d'alimentation délivré par le réseau d'alimentation 15 ou au potentiel de référence du câble de référence 16, et un dispositif de surveillance, permettant d'isoler le dispositif de commutation de la source en cas de dysfonctionnement.

Ainsi, sur la figure 2, le système avant 11 comporte un plot d'alimentation 21, un dispositif de commutation 31 et un dispositif de surveillance 71 et le système arrière 12 comporte un plot d'alimentation 22, un dispositif de commutation 32 et un dispositif de surveillance 72.

Un tramway 40 comporte deux frotteurs, respectivement avant 41 et arrière 42, montés mobiles sous la caisse du tramway 40 et propres à venir en contact, respectivement, du plot d'alimentation 21 du système de recharge avant 11 et du plot d'alimentation 22 du système de recharge arrière 12, lorsque le tramway 40 est arrêté le long du quai, dans une position prédéterminée permettant le captage de courant.

Au cours de la recharge du véhicule électrique, l'empreinte au sol de ce dernier recouvre le plot d'alimentation. Il n'y a donc pas de risque pour les personnes se déplaçant autour du véhicule électrique d'être électrocutées.

De manière plus détaillée, le dispositif de commutation 31 du système de recharge avant 11, intègre, en série entre le réseau d'alimentation 15 et un câble de raccordement 26 au plot d'alimentation 21, un sectionneur d'isolement 33 et un contacteur principal 34. De manière similaire, le dispositif de commutation 32 du système de recharge arrière 12, intègre, en série entre le réseau d'alimentation 15 et un câble de raccordement 27 au plot d'alimentation 22, un sectionneur d'isolement 33 et un contacteur principal 34.

Le contacteur principal 34 comporte une borne d'entrée connectée à une première borne de sortie du sectionneur d'isolement 33 et une borne de sortie connectée au câble de raccordement 26. Dans un état fermé du contacteur principal 34, il y continuité électrique entre son entrée et sa sortie. Dans un état ouvert du contacteur principal 34, il y discontinuité électrique entre son entrée et sa sortie.

Le sectionneur d'isolement 33 possède un première borne d'entrée connectée au réseau 15, une seconde borne d'entrée connectée au câble de référence 16, une première borne de sortie connectée à la borne d'entrée du contacteur principal 34 et une seconde borne de sortie connectée directement au câble de raccordement 26 au plot d'alimentation 21. Dans un état fermé du sectionneur d'isolement 33, il y continuité électrique entre les premières bornes d'entrée et de sortie et discontinuité électrique entre les secondes bornes d'entrée et de sortie. Dans un état ouvert du sectionneur d'isolement 33, il y discontinuité électrique entre les premières bornes d'entrée et de sortie et continuité électrique entre les secondes bornes d'entrée et de sortie.

Le dispositif de commutation 31 comporte également un module de commande 35 intégrant un module d'émission/réception sol 36 et un contacteur secondaire 37.

Le contacteur secondaire 37 comporte une borne d'entrée connectée au câble de référence 16 et une borne de sortie connectée au câble de raccordement 26 au plot d'alimentation 21. Dans un état fermé du contacteur secondaire 37, il y continuité électrique entre son entrée et sa sortie. Dans un état ouvert du contacteur 37, il y discontinuité électrique entre son entrée et sa sortie.

L'état du sectionneur d'isolement 33, celui du contacteur principal 34 et celui du contacteur secondaire de sécurité 37 sont commandés par le module de commande 35 de manière à placer le plot d'alimentation 21 soit au potentiel d'alimentation, soit au potentiel du référence, et ceci à l'exclusion de tout autre état possible.

En position fermée du sectionneur d'isolement 33, la fermeture du contacteur principal 34 et l'ouverture du contacteur secondaire 37 permet de relier le plot d'alimentation 21 au réseau 15 et donc de le porter au potentiel d'alimentation.

En position fermée du sectionneur d'isolement 33, l'ouverture du contacteur principal 34 et la fermeture du contacteur secondaire 37 permet de relier le plot d'alimentation 21 au câble de référence 16 et donc de le porter au potentiel de référence.

Le module d'émission/réception sol 36 est connecté à une antenne sol 38 prévue dans le plot d'alimentation 21. De manière similaire, pour le système arrière 12, le module d'émission/réception sol 36 est connecté à une antenne sol 39 prévue dans le plot d'alimentation 22.

Le module d'émission/réception sol 36 est propre à émettre continûment et périodiquement un premier signal, intégrant un code, qui est caractéristique de la fonction de recharge. Avantageusement le code émis par une antenne sol permet de distinguer le système avant 11, du système arrière 12.

Le module et l'antenne sol sont tels que le premier signal est émis avec une puissance relativement élevée, de manière à avoir une portée relativement importante, de l'ordre de quelques dizaines de centimètres. La fréquence utilisée est de préférence de plusieurs kHz, par exemple 38 kHz.

Le module et l'antenne sol permettent la réception d'un second signal émis par le tramway, indiquant que le frotteur est à proximité immédiate du plot d'alimentation correspondant.

Le dispositif de commande 35 est propre à maintenir fermé le contacteur principal 34, et à maintenir ouvert le contacteur 37 tant que le module d'émission/réception sol 36 reçoit un second signal.

Comme représenté schématiquement sur la figure 3, le plot d'alimentation, tel que le plot d'alimentation 21, est implanté sur le sol en béton de la voie, entre les deux fils de rails de roulement, sensiblement au droit du milieu du quai le long duquel le tramway s'arrête.

Le plot d'alimentation 21 est constitué d'une piste conductrice 23 maintenue par une semelle isolante 25. De manière similaire, un plot d'alimentation 22 est constitué d'une piste conductrice 24 maintenue par une semelle isolante 25.

La piste conductrice 23 est en un matériau conducteur électrique. Elle présente une forme parallélépipédique de section sensiblement rectangulaire. La face supérieure de la piste conductrice est exposée, de manière à permettre un contact avec un frotteur du tramway.

La semelle isolante 25 est en un matériau isolant électrique. Elle permet la fixation du plot d'alimentation 21, respectivement 21, sur le radier en béton constituant le sol de la voie. La semelle isolante 25 est munie d'un canal périphérique destiné à recevoir l'antenne sol 38, 39, celle-ci formant alors une boucle autour de la piste conductrice 23, 24.

Des passages prévus sous le plot d'alimentation 21, respectivement 22, dans le radier en béton permettent le cheminement d'un câble d'antenne, du câble de raccordement 26, 27, connecté à la piste conductrice 23, et éventuellement d'un câble de liaison 17, vers le boîtier renfermant le dispositif de commutation. Les câbles sont ainsi enterrés.

Le dispositif de surveillance 71 du système 11 comporte un module 73 de mesure de la tension du segment 23 du plot 21 et un module de d'alarme 74.

En fonction notamment de la mesure de la tension délivrée par le module 73, le module d'alarme 74 est propre à générer un signal d'alarme local à destination du module de commande 35 afin que ce dernier ouvre le sectionneur d'isolement 33 en cas de détection d'un dysfonctionnement.

En fonction notamment de la mesure de la tension délivrée par le module 73, le module d'alarme 74 est propre à générer un signal d'alarme général à destination d'un moyen de court-circuit 80 de la ou de chaque source d'alimentation de l'installation 10.

Plus précisément, le moyen de court-circuit 80 comporte une première ligne pilote 81 reliant en série des relais 83 équipant chaque paire de systèmes de recharge des stations S2, S1 et S0 et un court-circuiteur 88 au niveau de la première sous-station 18 et une seconde ligne pilote 82 reliant en série des relais 83 équipant chaque paire de systèmes de recharge des stations S3, S4 et S5 et un court-circuiteur 89 au niveau de la seconde sous-station 19.

Un court-circuiteur, lorsqu'il est fermé permet de mettre en court-circuit les bornes de la sous-station correspondante de sorte qu'aucune puissance ne peut être transmise par la sous-station sur le réseau d'alimentation 15.

En fonctionnement normal de l'installation 10, les court-circuiteurs 88, 89 sont ouverts. En cas de détection d'une défaillance majeure, les court-circuiteurs 88, 89 sont fermés.

Ainsi par exemple, lors de l'émission par un module d'alarme 74 d'un signal d'alarme général, le relais 83 associé au système de recharge considéré cesse de transmettre un signal pilote le long de la ligne pilote, 81 ou 82. Le court-circuiteur situé à l'extrémité de la ligne pilote se ferme, ne recevant plus le signal pilote. La source est ainsi isolée du reste de l'installation. Un signal de fermeture est également transmis vers le court-circuiteur de chacune des autres sous-stations de la section de manière à garantir qu'aucun plot d'alimentation de la section ne puisse être porté au potentiel d'alimentation.

Dans le présent mode de réalisation, le moyen de retour du courant est constitué par l'un des rails métalliques de la voie, le tramway étant équipé de roues métalliques. Pour le cas d'un véhicule guidé sur pneu ou d'un véhicule non guidé, le moyen de retour du courant peut par exemple être constitué par un second plot, porté au potentiel de référence via le câble de référence. Ce second plot d'alimentation est par exemple disposé en parallèle du plot d'alimentation.

Le tramway 40 peut éventuellement être équipé d'un dispositif d'asservissement 50 de sa position d'arrêt propre à détecter la présence d'une balise de positionnement, placée sur la voie, par exemple en tête de quai, en une position de référence prédéterminée. A bord du tramway, le dispositif d'asservissement 50 comporte une antenne de localisation propre à détecter un signal de localisation émis par la balise. En fonction du signal reçu, le dispositif d'asservissement 50 pilote l'arrêt du tramway de sorte que, à l'arrêt complet du tramway 40, l'antenne de localisation soit située à l'aplomb de la balise. De tels dispositifs d'asservissement sont connus de l'homme du métier. Ils permettent de garantir l'arrêt du véhicule dans une position prédéterminée, à une tolérance de positionnement près. Par exemple, pour un tramway, les dispositifs d'asservissement connus ont une tolérance de positionnement de l'ordre de +/- 10 cm par rapport à une position de référence associée à la balise, permettant dans les cas où il est nécessaire qu'à l'arrêt les portes du tramway soient en face de portes palières prévues sur le quai. En variante, lorsque l'arrêt est réalisé par le conducteur, la précision de positionnement au-dessus du plot est moins précise, par exemple +/- 75cm. La longueur des pistes conductrices 23 et 24 permettent d'accepter cette tolérance de positionnement.

Le fait de garantir la position d'arrêt du tramway par rapport au quai, permet de disposer chaque plot d'alimentation sur la voie et chaque frotteur sur le tramway, de manière à être certain que chaque frotteur puisse être mis en contact d'un plot d'alimentation correspondant lorsque le train est arrêté dans la position d'arrêt prédéterminée. Celle-ci permet alors le captage de courant par le tramway depuis le système de recharge.

La longueur de la piste conductrice d'un plot d'alimentation dépend ainsi de la tolérance de positionnement offerte par le dispositif d'asservissement mis en oeuvre. Pour une tolérance de +/- 75 cm, la piste conductrice a donc une longueur de l'ordre de 1,5 m.

Le tramway 40 comporte un moyen de stockage d'énergie 45. Il peut s'agir de n'importe quel type de moyen connu, en particulier des super-capacités (permettant de stocker de l'énergie électrique reçue du sol sous forme d'énergie électrique), un volant d'inertie (permettant de stocker l'énergie électrique reçue du sol sous forme d'énergie mécanique), etc.

Un frotteur est piloté par un dispositif de contrôle. Le frotteur avant 41 est piloté par le dispositif de contrôle 43, tandis que le frotteur arrière 42 est piloté par le dispositif de contrôle 44.

Un frotteur, par exemple le frotteur avant 41, disposé sous la caisse du véhicule électrique, est mobile entre une position haute, à l'écart de la surface supérieure de la piste conductrice 23 du plot d'alimentation 21, et une position basse, en contact avec la surface supérieure de la piste conductrice 23 du plot d'alimentation 21.

Le frotteur 41 est déplacé par un actionneur 62 adapté du dispositif de contrôle 43.

Le dispositif de contrôle 43 comporte un module d'émission/réception bord 64, connecté à une antenne bord 66 portée par le frotteur 41.

Le module d'émission/réception bord 64 et l'antenne bord 66 sont propres à recevoir le premier signal émis par le module d'émission/réception sol 36 et l'antenne sol 38, et ceci quelle que soit la position haute ou basse du frotteur 41 portant l'antenne embarquée, la puissance d'émission du premier signal étant suffisamment élevée. Le module d'émission/réception bord 64 est propre à extraire le code caractéristique contenu dans le premier signal reçu.

Le module d'émission/réception bord 64 et l'antenne bord 66 sont propres à émettre un second signal. Le second signal est émis avec une puissance relativement faible, mais légèrement supérieure au seuil de détection de l'antenne sol 38 et du module d'émission/réception sol 36 de manière à ce que l'antenne sol 38 et le module d'émission/réception sol 36 ne détectent le second signal que lorsque le frotteur 41 portant l'antenne bord 66 est à proximité immédiate du plot d'alimentation 21, c'est-à-dire lorsqu'il est en position basse, en contact avec ce dernier.

Le dispositif de contrôle 43 comporte un dispositif de mesure de la tension 67, permettant de déterminer la tension instantanée du frotteur 41, en particulier s'il est en contact avec le plot d'alimentation 21 porté au potentiel d'alimentation.

Le dispositif de contrôle 43 comporte un module de calcul 68, propre à commander l'actionneur 62 de déplacement du frotteur 41 de la position haute vers la position basse, pour que le frotteur soit mis en contact du plot d'alimentation, et, réciproquement, de la position basse à la position haute pour que le frotteur soit écarté du plot d'alimentation.

Le module de calcul 68 est propre à vérifier différentes contraintes avant de commander le déploiement du frotteur.

Le module de calcul 68 vérifie que le tramway 40 est arrêté en station. Cette information est par exemple fournie par le dispositif 50 indiquant si oui ou non la vitesse du tramway est nulle. Dans l'affirmative, le module de calcul 68 est propre à émettre un ordre d'inhibition de la traction du tramway, afin d'interdire toute accélération du tramway alors que le frotteur a quitté sa position de repli en position haute.

Le module de calcul 68 vérifie que le module d'émission/réception bord 64 reçoit un premier signal émis par une antenne sol. Plus précisément, le module de calcul 68 vérifie la valeur du code extrait du premier signal reçu. Ceci permet de garantir que la position d'arrêt prédéterminée est atteinte et que le frotteur se trouve effectivement au-dessus d'un système de recharge.

Le module de calcul 68 est propre à commander le module d'émission/réception bord 64 pour qu'il émette le second signal périodiquement.

Lorsque le module de calcul 68 détecte la présence de tension sur le frotteur, il est propre à commander un commutateur bord 69 qui, lorsqu'il est fermé, connecte électriquement le frotteur 41 à une première borne du moyen de stockage d'énergie 45. Une autre borne du moyen de stockage d'énergie 45 est connectée au moyen de retour du courant, en l'occurrence la roue métallique du tramway.

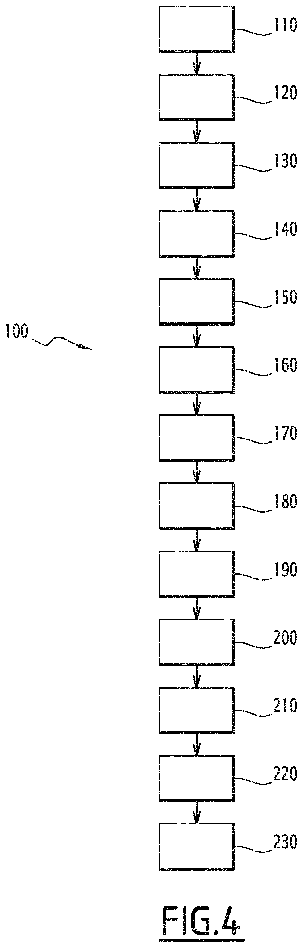

Le procédé 100 d'utilisation des moyens venant d'être décrit va maintenant être présenté en référence avec la figure 4.

A l'étape 110, le module d'émission/réception sol 36 génère périodiquement et de manière continue un premier signal, intégrant un code caractéristique. La piste conductrice 23 du plot d'alimentation 21 est au potentiel de référence du rail (0 V rail), le contacteur 37 étant fermé et le contacteur de puissance 34 étant ouvert. L'installation 10 fonctionnant correctement, les court-circuiteurs 88 et 89 des sous-stations d'alimentation sont ouverts et les sectionneurs d'isolement 33 des différents systèmes sont fermés.

A l'étape 120, lorsque le tramway 40 arrive en station, le conducteur du tramway amène le tramway 40 à l'arrêt dans une position prédéterminée, qui permet également le captage de courant.

Cette position est confirmée par le fait que le module d'émission/réception bord 64, associé au frotteur avant 41, reçoit le premier signal émis par le module d'émission/réception sol 36 et l'antenne sol 38 du système de recharge avant 11. Le module d'émission/réception bord 64 en extrait le code caractéristique, indicatif du fait que le frotteur 41 se trouve effectivement à l'aplomb du plot d'alimentation 21.

A l'étape 130, le dispositif de contrôle 43 associé au frotteur avant 41 du tramway 40 émet un ordre d'inhibition de la traction empêchant tout redémarrage du tramway 40. Le dispositif de contrôle 43 commande également l'actionneur 62 pour déployer le frotteur 41 afin qu'il vienne en contact avec la piste conductrice 23 du plot d'alimentation 21. Le dispositif de contrôle 43 commande ensuite l'émission périodique par le module d'émission/réception bord 64 et l'antenne bord 66 d'un second signal.

A l'étape 140, le second signal est capté par le module d'émission/réception sol 36 et l'antenne sol 38. Le dispositif de commande 31 détecte ainsi la présence du tramway 40.

En conséquence, à l'étape 150, le module de commande 35 commande simultanément en ouverture le contacteur 37 et en fermeture le contacteur de puissance 34. La piste conductrice 23 du plot d'alimentation 21 est alors portée au potentiel d'alimentation.

A l'étape 160, le dispositif embarqué de mesure de la tension 67 détecte que le frotteur 41, en contact avec la piste conductrice 23 du plot d'alimentation 21, est porté au potentiel de référence. Il en informe le module de calcul 68.

En conséquence, à l'étape 170, le module de calcul 68 ferme le contacteur embarqué 69 permettant la connexion électrique du frotteur 41 et du moyen de stockage 45.

Durant l'étape 180, une puissance électrique est transmise du sol vers le tramway, permettant la recharge de ce dernier.

A l'étape 190, lorsque le module de calcul 68 décide de la fin de la recharge, par exemple lorsque la recharge a atteint un seuil prédéterminé, il commande en ouverture le contacteur embarqué 69 de manière à interrompre le courant circulant entre le frotteur 41 et le moyen de stockage 45.

A l'étape 190, le module de calcul 68 commande ensuite le module d'émission/réception bord 64 de manière à ce qu'il cesse d'émettre le second signal.

A l'étape 200, le module d'émission/réception sol 36 cessant de recevoir le second signal, le dispositif de commande 35 commande en ouverture le contacteur de puissance 34, et ferme le contacteur 37 pour placer la piste conductrice 23 du plot d'alimentation 21 au potentiel de référence.

A l'étape 210, le dispositif embarqué de mesure de la tension 67 permet de détecter que le frotteur est maintenant au potentiel de référence. Le module de calcul 68 commande l'actionneur 62 de manière à relever le frotteur 41 à l'écart du plot d'alimentation 21, pour le replacer en position haute permettant la circulation du tramway.

A l'étape 220, le module de calcul 68 annule son instruction d'inhibition de la traction.

A l'étape 230, le tramway accélère pour quitter la station.

Lorsque le dispositif de surveillance 71 détecte une défaillance quelconque du dispositif de commande 31, par exemple lorsque la mesure du potentiel du segment 23 est différente du potentiel de référence alors qu'aucun tramway n'est présent au-dessus du plot d'alimentation 21, il génère un signal d'alarme local à destination du module de commande 35. Celui-ci commande alors le basculement dans l'état ouvert du sectionneur d'isolement 33, de manière à ouvrir la connexion entre le câble de raccordement 26 et le réseau 15 et fermer la connexion entre le câble de raccordement 26 et le câble de référence 16.

Une fois cette opération locale de mise en sécurité de l'installation, le dispositif de surveillance 71 continue de vérifier périodiquement le potentiel du plot 21.

Si la défaillance détectée persiste, le dispositif de surveillance 71 génère un signal d'alarme général à destination du relais 83 auquel est connecté le système de recharge. Celui-ci interrompt la transmission du signal pilote, ce qui a pour conséquence immédiate la fermeture des court-circuiteurs 88 et 89 des sous-stations d'alimentation 18 et 19.

Cette opération générale de mise en sécurité de l'installation permet d'empêcher toute alimentation des plots de la section concernée.

Ainsi, la sécurité de l'installation repose sur la détection de la présence d'un tramway au-dessus d'un plot d'alimentation par la détection, par le sol, d'un signal émis par le tramway, la surveillance à tout instant du potentiel auquel chaque plot d'alimentation est porté avec, si nécessaire, une mise en sécurité locale et/ou une mise en sécurité générale de l'installation en cas de détection d'une défaillance ou d'un dysfonctionnement.

Le procédé 100 d'utilisation des moyens venant d'être décrit va maintenant être présenté en référence avec la figure 4.

A l'étape 110, le module d'émission/réception sol 36 génère périodiquement et de manière continue un premier signal, intégrant un code caractéristique. La piste conductrice 23 du plot d'alimentation 21 est au potentiel de référence du rail (0 V rail), le contacteur 37 étant fermé et le contacteur de puissance 34 étant ouvert. L'installation 10 fonctionnant correctement, les court-circuiteurs 88 et 89 des sous-stations d'alimentation sont ouverts et les sectionneurs d'isolement 33 des différents systèmes sont fermés.

A l'étape 120, lorsque le tramway 40 arrive en station, le conducteur du tramway amène le tramway 40 à l'arrêt dans une position prédéterminée, qui permet également le captage de courant.

Cette position est confirmée par le fait que le module d'émission/réception bord 64, associé au frotteur avant 41, reçoit le premier signal émis par le module d'émission/réception sol 36 et l'antenne sol 38 du système de recharge avant 11. Le module d'émission/réception bord 64 en extrait le code caractéristique, indicatif du fait que le frotteur 41 se trouve effectivement à l'aplomb du plot d'alimentation 21.

A l'étape 130, le dispositif de contrôle 43 associé au frotteur avant 41 du tramway 40 émet un ordre d'inhibition de la traction empêchant tout redémarrage du tramway 40. Le dispositif de contrôle 43 commande également l'actionneur 62 pour déployer le frotteur 41 afin qu'il vienne en contact avec la piste conductrice 23 du plot d'alimentation 21. Le dispositif de contrôle 43 commande ensuite l'émission périodique par le module d'émission/réception bord 64 et l'antenne bord 66 d'un second signal.

A l'étape 140, le second signal est capté par le module d'émission/réception sol 36 et l'antenne sol 38. Le dispositif de commande 31 détecte ainsi la présence du tramway 40.

En conséquence, à l'étape 150, le module de commande 35 commande simultanément en ouverture le contacteur 37 et en fermeture le contacteur de puissance 34. La piste conductrice 23 du plot d'alimentation 21 est alors portée au potentiel d'alimentation.

A l'étape 160, le dispositif embarqué de mesure de la tension 67 détecte que le frotteur 41, en contact avec la piste conductrice 23 du plot d'alimentation 21, est porté au potentiel de référence. Il en informe le module de calcul 68.

En conséquence, à l'étape 170, le module de calcul 68 ferme le contacteur embarqué 69 permettant la connexion électrique du frotteur 41 et du moyen de stockage 45.

Durant l'étape 180, une puissance électrique est transmise du sol vers le tramway, permettant la recharge de ce dernier.

A l'étape 190, lorsque le module de calcul 68 décide de la fin de la recharge, par exemple lorsque la recharge a atteint un seuil prédéterminé, il commande en ouverture le contacteur embarqué 69 de manière à interrompre le courant circulant entre le frotteur 41 et le moyen de stockage 45.

A l'étape 190, le module de calcul 68 commande ensuite le module d'émission/réception bord 64 de manière à ce qu'il cesse d'émettre le second signal.

A l'étape 200, le module d'émission/réception sol 36 cessant de recevoir le second signal, le dispositif de commande 35 commande en ouverture le contacteur de puissance 34, et ferme le contacteur 37 pour placer la piste conductrice 23 du plot d'alimentation 21 au potentiel de référence.

A l'étape 210, le dispositif embarqué de mesure de la tension 67 permet de détecter que le frotteur est maintenant au potentiel de référence. Le module de calcul 68 commande l'actionneur 62 de manière à relever le frotteur 41 à l'écart du plot d'alimentation 21, pour le replacer en position haute permettant la circulation du tramway.

A l'étape 220, le module de calcul 68 annule son instruction d'inhibition de la traction.

A l'étape 230, le tramway accélère pour quitter la station.

Lorsque le dispositif de surveillance 71 détecte une défaillance quelconque du dispositif de commande 31, par exemple lorsque la mesure du potentiel du segment 23 est différente du potentiel de référence alors qu'aucun tramway n'est présent au-dessus du plot d'alimentation 21, il génère un signal d'alarme local à destination du module de commande 35. Celui-ci commande alors le basculement dans l'état ouvert du sectionneur d'isolement 33, de manière à ouvrir la connexion entre le câble de raccordement 26 et le réseau 15 et fermer la connexion entre le câble de raccordement 26 et le câble de référence 16.

Une fois cette opération locale de mise en sécurité de l'installation, le dispositif de surveillance 71 continue de vérifier périodiquement le potentiel du plot 21.

Si la défaillance détectée persiste, le dispositif de surveillance 71 génère un signal d'alarme général à destination du relais 83 auquel est connecté le système de recharge. Celui-ci interrompt la transmission du signal pilote, ce qui a pour conséquence immédiate la fermeture des court-circuiteurs 88 et 89 des sous-stations d'alimentation 18 et 19.

Cette opération générale de mise en sécurité de l'installation permet d'empêcher toute alimentation des plots de la section concernée.

Ainsi, la sécurité de l'installation repose sur la détection de la présence d'un tramway au-dessus d'un plot d'alimentation par la détection, par le sol, d'un signal émis par le tramway, la surveillance à tout instant du potentiel auquel chaque plot d'alimentation est porté avec, si nécessaire, une mise en sécurité locale et/ou une mise en sécurité générale de l'installation en cas de détection d'une défaillance ou d'un dysfonctionnement.

## Revendications

1. Ensemble constitué d'un véhicule électrique (40) et d'un système de recharge (11, 12) du type stationnaire par conduction pour la recharge dudit véhicule électrique lorsqu'il est arrêté dans une position prédéterminée autorisant le captage d'énergie depuis le système de recharge,
**caractérisé en ce que** le système de recharge (11, 12) comporte un plot d'alimentation (21, 22), disposé au sol et associé à un moyen de retour de courant, et un dispositif de commutation (31, 32) propre à porter le plot d'alimentation à une tension d'alimentation délivrée par une source de puissance électrique à laquelle le système de recharge (11, 12) est connecté,
**en ce que** le véhicule (40) comporte un frotteur (41, 42) connecté électriquement à des moyens embarqués de stockage d'énergie (45), le frotteur étant placé sous une caisse du véhicule et mobile entre une position haute, à distance du plot d'alimentation, et une position basse, en contact avec le plot d'alimentation, le véhicule (40) comportant un dispositif de contrôle (43, 44) propre à commander le déplacement du frotteur de la position haute vers la position basse pour qu'il soit mis en contact du plot d'alimentation, uniquement lorsque le véhicule est arrêté dans ladite position prédéterminée, position de captage dans laquelle l'empreinte au sol du véhicule recouvre le plot d'alimentation,
et **en ce que** l'ensemble comporte un équipement de communication bidirectionnel entre le système de recharge (11, 12) et le véhicule (40), comportant un module émetteur/récepteur au sol (36) connecté à une antenne au sol (38, 39) située au voisinage du plot d'alimentation (21, 22), et un module émetteur/récepteur bord (64) connectée à une antenne bord (66, 67), portée par le frotteur (41 , 42), le dispositif émetteur/récepteur sol (36) étant propre à émettre en continu sur une portée importante un premier signal, le module d'émission/réception bord étant propre à détecter le premier signal en position haute et en position basse du frotteur (41, 42), le premier signal lorsqu'il est reçu indiquant que le frotteur se trouve à l'aplomb d'un plot d'alimentation, le module d'émission/réception bord (64) étant propre à émettre sur une portée réduite, un second signal, le module d'émission/réception sol étant propre à détecter le second signal uniquement en position basse du frotteur (41, 42), le second signal lorsqu'il est reçu indiquant que le frotteur se trouve en contact du plot d'alimentation.

2. Ensemble selon la revendication 1, dans lequel le dispositif de contrôle (43) est propre à détecter que le frotteur (41, 42), mis en contact du plot d'alimentation (21, 22), est porté à un potentiel d'alimentation et, en conséquence, à connecter électriquement le frotteur (41, 42) aux moyens de stockage d'énergie (45) en commandant en fermeture un commutateur embarqué (69).

3. Ensemble selon l'une quelconque des revendications 1 à 2, dans lequel le véhicule est un véhicule guidé (40) le long d'une voie (3, 4) comportant au moins un rail métallique et le moyen de retour du courant est constitué par ledit rail connecté à un potentiel de référence, ou le véhicule est un véhicule non-guidé et le moyen de retour du courant est constitué par un plot de référence connecté à un potentiel de référence.

4. Ensemble selon l'une quelconque des revendications 1 à 3, dans lequel le dispositif de commande (31, 32) comporte, en série entre la source et le plot d'alimentation, un contacteur principal (34) et un sectionneur d'isolement (33), permettant de placer le plot d'alimentation exclusivement soit au potentiel d'alimentation, soit au potentiel de référence.

5. Ensemble selon l'une quelconque la revendication 4, dans lequel le dispositif de commande (31, 32) comporte un contacteur (37) en parallèle de l'ensemble formé du contacteur principal (34) et du sectionneur d'isolement (33).

6. Ensemble selon l'une quelconque des revendications 1 à 5, dans lequel un plot d'alimentation (21, 22) comporte une piste conductrice (23, 24), avec laquelle le frotteur (21, 22) d'un véhicule (40) est propre à venir en contact, et une semelle isolante (25) de fixation du plot d'alimentation sur le sol de la voie, la semelle isolante étant munie d'un canal périphérique de réception de l'antenne sol (38, 39).

7. Ensemble selon l'une quelconque des revendications 1 à 6, propre à délivrer une puissance de l'ordre de 1 MW, le potentiel d'alimentation étant entre 600 V et 1000 V, de préférence égal à 760 V.

8. Système de recharge du type stationnaire par conduction (11, 12, 13, 14), **caractérisé en ce que**, pour coopérer avec un véhicule électrique (40) de manière à constituer un ensemble conforme à l'une quelconque des revendications 1 à 7, ledit système de recharge permettant la recharge dudit véhicule électrique lorsqu'il est arrêté dans une position prédéterminée autorisant le captage d'énergie depuis le système de recharge, le système de recharge (11, 12) comporte :
- un plot d'alimentation (21, 22), disposé au sol et associé à un moyen de retour de courant, et
- un dispositif de commutation (31, 32) propre à porter le plot d'alimentation à une tension d'alimentation délivrée par une source de puissance électrique à laquelle le système de recharge (11, 12) est connecté,
le véhicule (40) comportant un frotteur (41, 42) connecté électriquement à des moyens embarqués de stockage d'énergie (45), le frotteur étant placé sous une caisse du véhicule et mobile entre une position haute, à distance du plot d'alimentation, et une position basse, en contact avec le plot d'alimentation, le véhicule (40) comportant un dispositif de contrôle (43, 44) propre à commander le déplacement du frotteur de la position haute vers la position basse pour qu'il soit mis en contact du plot d'alimentation, uniquement lorsque le véhicule est arrêté dans ladite position prédéterminée, position de captage dans laquelle l'empreinte au sol du véhicule recouvre le plot d'alimentation.

9. Installation d'alimentation (10) d'un véhicule électrique (40), **caractérisé en ce qu'**il comporte une pluralité de systèmes de recharge conformes à celui de la revendication 8.

10. Installation selon la revendication 9, comportant, par position prédéterminée du véhicule électrique permettant la recharge de ce dernier, au moins deux systèmes de recharge stationnaire par conduction (11, 12).

11. Véhicule ferroviaire (40), **caractérisé en ce qu'**il est destiné à être intégré à un ensemble conforme à l'une quelconque des revendications 1 à 7.

12. Procédé d'utilisation d'un ensemble selon l'une quelconque des revendications 1 à 7, **caractérisé en ce qu'**il comporte les étapes suivantes :
- émission par le sol d'un premier signal de longue portée ;
- détection par le bord du premier signal émis par le sol, indicatif du fait que le frotteur (41, 42) se trouve à l'aplomb d'un plot d'alimentation (21, 22) d'un système de recharge (11, 12);
- commande de la descente du frotteur (41, 42) pour qu'il vienne en contact avec le plot d'alimentation (21, 22) ;
- émission par le bord d'un second signal de faible portée ;
- réception par le sol du second signal, indicatif de la mise en contact d'un frotteur (41, 42) avec le plot de recharge (21, 22) ;
- commande du contacteur de puissance au sol (34) et du contacteur de puissance embarqué (69) permettant la mise au potentiel d'alimentation du plot d'alimentation (21, 22) et la connexion du frotteur aux moyens embarqués de stockage d'énergie (45) pour débuter la recharge.

13. Procédé selon la revendication 12, comportant en outre les étapes suivantes à la fin de la recharge :
- commande en ouverture du contacteur embarqué (69) pour isoler électriquement le frotteur (41, 42) du moyen de stockage d'énergie (45) ;
- arrêt de l'émission du second signal émis par le bord ;
- détection de la fin de l'émission du second signal par le sol et commande en ouverture du contacteur de puissance (34) pour placer le plot d'alimentation (21, 22) au potentiel de référence ;
- détecter que le frotteur (41, 42) est au potentiel de référence et commander le déplacement du frotteur (41, 42) à l'écart du plot d'alimentation (21, 22) ;
- autoriser le véhicule électrique à redémarrer.

## Patentansprüche

1. Anordnung gebildet aus einem elektrischen Fahrzeug (40) und einem System zum Wiederaufladen (11, 12) vom stationären Typ mittels Leiten für das Wiederaufladen des elektrischen Fahrzeugs, wenn es in einer vorgegebenen Position abgestellt ist, die die Aufnahme von Energie von dem System zum Wiederaufladen erlaubt,
dadurch charakterisiert, dass das System zum Wiederaufladen (11, 12) einen Versorgungskontakt (21, 22), der am Boden angeordnet ist und mit einem Rückstrommittel assoziiert ist, und eine Schaltvorrichtung (31, 32) aufweist, die geeignet ist, den Versorgungskontakt auf eine Versorgungsspannung, die von einer elektrischen Energiequelle, mit der das System zum Wiederaufladen (11, 12) verbunden ist, geliefert wird, zu bringen,
dadurch, dass das Fahrzeug (40) einen Schleifkontakt (41, 42) aufweist, der elektrisch mit Bord-Energiespeichermitteln (45) verbunden ist, wobei der Schleifkontakt unter einer Karosserie des Fahrzeugs und bewegbar zwischen einer oberen Position, im Abstand zu dem Versorgungskontakt, und einer unteren Position, in Kontakt mit dem Versorgungskontakt, angeordnet ist, wobei das Fahrzeug (40) eine Steuervorrichtung (43, 44) aufweist, die geeignet ist zum Steuern der Bewegung des Schleifkontakts von der oberen Position in die untere Position, so dass er in Kontakt mit dem Versorgungskontakt gebracht wird, nur wenn das Fahrzeug in der vorgegebenen Position abgestellt ist, die eine Aufnahmeposition ist, in der der Abdruck des Fahrzeugs am Boden den Versorgungskontakt bedeckt, dadurch, dass die Anordnung ein Gerät zur bidirektionalen Kommunikation zwischen dem System zum Wiederaufladen (11, 12) und dem Fahrzeug (40) aufweist, das ein Sender/Empfänger-Modul am Boden (36) aufweist, das mit einer Antenne am Boden (38, 39) verbunden ist, die sich benachbart zu dem Versorgungskontakt (21, 22) befindet, und ein Bord-Sender/Empfänger-Modul (64) aufweist, das mit einer Bordantenne (66, 67) verbunden ist, die von dem Schleifkontakt (41, 42) getragen wird, wobei die Boden-Sender/Empfänger-Vorrichtung (36) geeignet ist, kontinuierlich über eine erhebliche Reichweite ein erstes Signal zu senden, wobei das Bord-Sende/Empfangs-Modul geeignet ist, das erste Signal in der oberen Position und in der unteren Position des Schleifkontakts (41, 42) zu detektieren, wobei das erste Signal, wenn es empfangen wird, anzeigt, dass sich der Schleifkontakt im Lot eines Versorgungskontakts befindet, wobei das Bord-Sende/Empfangs-Modul (64) geeignet ist, über eine reduzierte Reichweite ein zweites Signal zu senden, wobei das Boden-Sende/Empfangs-Modul geeignet ist, das zweite Signal nur in der unteren Position des Schleifkontakts (41, 42) zu detektieren, wobei das zweite Signal, wenn es empfangen wird, anzeigt, dass sich der Schleifkontakt in Kontakt mit dem Versorgungskontakt befindet.

2. Anordnung gemäß Anspruch 1, in dem die Steuervorrichtung (43) geeignet ist, zu detektieren, dass der Schleifkontakt (41, 42), in Kontakt gebracht mit dem Versorgungskontakt (21, 22), auf ein Versorgungspotential gebracht ist und, als Folge, den Schleifkontakt (41, 42) durch Steuern eines Schalters an Bord (69), sodass er sich schließt, mit den Energiespeichermitteln (45) zu verbinden.

3. Anordnung gemäß einem der Ansprüche 1 bis 2, in dem das Fahrzeug ein entlang einem Gleis (3, 4), das mindestens eine Metallschiene aufweist, geführtes Fahrzeug (40) ist, und das Rückstrommittel durch die mit einem Referenzpotential verbundene Schiene gebildet wird oder das Fahrzeug ein nicht-geführtes Fahrzeug ist und das Rückstrommittel durch einen Referenzkontakt gebildet wird, der mit einem Referenzpotential verbunden ist.

4. Anordnung gemäß einem der Ansprüche 1 bis 3, in dem die Steuervorrichtung (31, 32) seriell zwischen der Quelle und dem Versorgungskontakt einen Hauptkontaktgeber (34) und einen Isolationstrennschalter (33) aufweist, die es ermöglichen, den Versorgungskontakt entweder auf das Versorgungspotential oder auf das Referenzpotential zu bringen.

5. Anordnung gemäß Anspruch 4, in dem die Steuervorrichtung (31, 32) einen Kontaktgeber (37) parallel zu der aus dem Hauptkontaktgeber (34) und dem Isolationstrennschalter (33) gebildeten Anordnung aufweist.

6. Anordnung gemäß einem der Ansprüche 1 bis 5, in dem ein Versorgungskontakt (21, 22) eine Leiterbahn (23, 24) aufweist, mit der der Schleifkontakt (21, 22) eines Fahrzeugs (40) in Kontakt kommen kann, und eine isolierende Sohle (25) zum Befestigen des Versorgungskontakts auf dem Boden des Gleises aufweist, wobei die isolierende Sohle mit einem peripheren Kanal zum Aufnehmen der Bodenantenne (38, 39) versehen ist.

7. Anordnung gemäß einem der Ansprüche 1 bis 6, geeignet zum Liefern einer Leistung der Größenordnung 1MW, wobei das Versorgungspotential zwischen 600 V und 1000 V, bevorzugt bei 760 V liegt.

8. System zum Wiederaufladen vom stationären Typ mittels Leiten (11, 12, 13, 14), dadurch charakterisiert, dass, zum Zusammenarbeiten mit einem elektrischen Fahrzeug (40) in der Art, das eine Anordnung gemäß einem der Ansprüche 1 bis 7 gebildet wird, das System zum Wiederaufladen das Aufladen des elektrischen Fahrzeugs, wenn es in einer vorgegebenen Position abgestellt ist, die die Aufnahme von Energie von dem System zum Wiederaufladen erlaubt, ermöglicht, wobei das System zum Wiederaufladen (11, 12) aufweist:
- einen Versorgungskontakt (21, 22), der am Boden angeordnet ist und mit einem Rückstrommittel assoziiert ist, und
- eine Schaltvorrichtung (31, 32) aufweist, die geeignet ist, den Versorgungskontakt auf eine Versorgungsspannung, die von einer elektrischen Energiequelle, mit der das System zum Wiederaufladen (11, 12) verbunden ist, geliefert wird, zu bringen, wobei das Fahrzeug (40) einen Schleifkontakt (41, 42) aufweist, der elektrisch mit Bord-Energiespeichermitteln (45) verbunden ist, wobei der Schleifkontakt unter einer Karosserie des Fahrzeugs und bewegbar zwischen einer oberen Position, im Abstand zu dem Versorgungskontakt, und einer unteren Position, in Kontakt mit dem Versorgungskontakt, angeordnet ist, wobei das Fahrzeug (40) eine Steuervorrichtung (43, 44) aufweist, die geeignet ist zum Steuern der Bewegung des Schleifkontakts von der oberen Position in die untere Position, so dass er in Kontakt mit dem Versorgungskontakt gebracht wird, nur wenn das Fahrzeug in der vorgegebenen Position abgestellt ist, die eine Aufnahmeposition ist, in der der Abdruck des Fahrzeugs am Boden den Versorgungskontakt bedeckt.

9. Einrichtung zur Versorgung (10) eines elektrischen Fahrzeugs (40), dadurch charakterisiert, dass es eine Mehrzahl von Systemen zum Wiederaufladen gemäß dem von Anspruch 8 aufweist.

10. Einrichtung gemäß Anspruch 9, aufweisend, pro vorgegebener Position des elektrischen Fahrzeugs, die das Wiederaufladen des letzteren ermöglicht, mindestens zwei Systeme zum stationären Wiederaufladen mittels Leiten (11, 12).

11. Schienenfahrzeug (40), dadurch charakterisiert, dass es dazu vorgesehen ist, in eine Anordnung gemäß einem der Ansprüche 1 bis 7 integriert zu werden.

12. Verfahren zur Verwendung einer Anordnung gemäß einem der Ansprüche 1 bis 7, dadurch charakterisiert, dass es die folgenden Schritte aufweist:
- Senden vom Boden eines ersten Signals mit hoher Reichweiter;
- Detektion an Bord des ersten vom Boden gesendeten Signals, was die Tatsache anzeigt, dass der Schleifkontakt (41, 42) sich im Lot eines Versorgungskontakts (21, 22) eines Wiederaufladesystems (11, 12) befindet;
- Befehlen des Senkens des Schleifkontakts (41, 42), so dass er in Kontakt mit dem Versorgungskontakt (21, 22) kommt;
- Senden von Bord eines zweiten Signals mit schwacher Reichweite;
- Empfang am Boden des zweiten Signals, was anzeigt, dass ein Schleifkontakt (41, 42) mit dem Wiederaufladekontakt (21, 22) in Kontakt gebracht wurde;
- Steuern des Leistungskontaktgebers (34) am Boden und des Leistungskontaktgebers an Bord (69), wobei ermöglicht wird, dass zum Beginnen des Wiederaufladens der Versorgungskontakt (21, 22) auf das Versorgungspotential gebracht wird und der Schleifkontakt mit den Energiespeichermitteln (45) an Bord verbunden wird.

13. Verfahren gemäß dem Anspruch 12, außerdem aufweisend die folgenden Schritte am Ende des Wiederaufladens:
- Steuern des Kontaktgebers an Bord (69), so dass er sich öffnet, um den Schleifkontakt (41, 42) elektrisch von dem Energiespeichermittel (45) zu isolieren;
- Anhalten des Sendens des von Bord gesendeten zweiten Signals;
- Detektion des Endes des Sendens des zweiten Signals am Boden und Steuern des Leistungs-Kontaktgebers (34), sodass es sich öffnet, um den Versorgungskontakt (21, 22) auf das Referenzpotential zu bringen;
- Detektieren, dass der Schleifkontakt (41, 42) auf dem Referenzpotential ist und Befehlen der Bewegung des Schleifkontakts (41, 42) weg von dem Versorgungskontakt (21, 22);
- Autorisieren, dass das elektrische Fahrzeug startet.

## Claims

1. An assembly made up of an electric vehicle (40) and a recharging system (11, 12) of a stationary conduction type for recharging said electric vehicle when it is stopped in a predetermined position allowing the energy capture from the recharging system, **characterized in that** the recharging system (11, 12) includes a power supply contact (21, 22), positioned on the ground and associated with a current return means, and a switching device (31, 32) able to bring the power supply contact to a supply voltage delivered by an electric power source to which the recharging system (11, 12) is connected,
**in that** the electric vehicle (40) includes a contact shoe (41, 42) electrically connected to an onboard energy storage means (45), the contact shoe being placed below a body of the electric vehicle and movable between a high position, away from the power supply contact, and a low position, in contact with the power supply contact, the electric vehicle (40) including a control device (43, 44) able to command the movement of the contact shoe from the high position to the low position so that it is placed in contact with the power supply contact, only when the vehicle is stopped in said predetermined position, which is a energy capture position in which the footprint of the electric vehicle covers the power supply contact,
and **in that** the assembly includes a two-way communication equipment between the recharging system (11, 12) and the electric vehicle (40), including a ground transceiver module (36) connected to a ground antenna (38, 39) situated near the power supply contact (21, 22), and an onboard transceiver module (64) connected to an onboard antenna (66, 67), supported by the contact shoe (41, 42), the ground transceiver device (36) being able to transmit a first signal continuously over a significant range, the onboard transceiver module being able to detect the first signal in the high position and low position of the contact shoe (41, 42), the first signal, when it is received, indicating that the contact shoe is over a power supply contact, the onboard transceiver module (64) being able to transmit a second signal over a reduced range, the ground transceiver module being able to detect the second signal only in the low position of the contact shoe (41, 42), the second signal, when it is received, indicating that the contact shoe is in contact with the power supply contact.

2. The assembly according to claim 1, wherein the control device (43) is able to detect that the contact shoe (41, 42), placed in contact with the power supply contact (21, 22), is brought to a power supply potential and, consequently, to electrically connect the contact shoe (41, 42) to the energy storage means (45) by commanding the closing of an onboard switch (69).

3. The assembly according to any one of claims 1 to 2, wherein the electric vehicle is a vehicle (40) guided along a track (3, 4) including at least one metal rail and the current return means is made up of said rail connected to a reference potential, or the vehicle is a non-guided vehicle and the current return means is made up of a reference contact connected to a reference potential.

4. The assembly according to any one of claims 1 to 3, wherein the command device (31, 32) includes, in series between the source and the power supply contact, a main contactor (34) and a disconnecting switch (33), making it possible to place the power supply contact exclusively either at the power supply potential or the reference potential.

5. The assembly according to claim 4, wherein the command device (31, 32) includes a contactor (37) in parallel with the assembly formed by the main contactor (34) and the disconnecting switch (33).

6. The assembly according to any one of claims 1 to 5, wherein a power supply contact (21, 22) includes a conductive track (23, 24), with which the contact shoe (21, 22) of a electric vehicle (40) is able to come into contact, and an insulating soleplate (25) for fastening the power supply contact on the ground of the track, the insulating soleplate being provided with a peripheral channel for receiving the ground antenna (38, 39).

7. The assembly according to any one of claims 1 to 7, able to deliver a power of about 1 MW, the power supply potential being between 600 V and 1000 V, preferably equal to 760 V.

8. A recharging system of the stationary conduction type (11, 12, 13, 14), **characterized in that**, in order to cooperate with an electric vehicle (40) so as to form an assembly according to any one of claims 1 to 7, said recharging system making it possible to recharge said electric vehicle when it is stopped in a predetermined position allowing the energy capture from the recharging system, the recharging system (11, 12) includes:
- a power supply contact (21, 22), positioned on the ground and associated with a current return means, and
- a switching device (31, 32) able to bring the power supply contact to a supply voltage delivered by an electricity source to which the recharging system (11, 12) is connected,
the vehicle (40) including a contact shoe (41, 42) electrically connected to an onboard energy storage means (45), the contact shoe being placed below a body of the vehicle and movable between a high position, away from the power supply contact, and a low position, in contact with the power supply contact, the vehicle (40) including a control device (43, 44) able to command the movement of the contact shoe from the high position to the low position so that it is placed in contact with the power supply contact, only when the vehicle is stopped in said predetermined position, which is a capture position in which the footprint of the vehicle covers the power supply contact.

9. A power supply facility (10) for an electric vehicle (40), **characterized in that** it includes a plurality of recharging systems according to that of claim 8.

10. The power supply facility according to claim 9, including, for each predetermined position of the electric vehicle allowing recharging of the latter, at least two conduction stationary recharging systems (11, 12).

11. A rail vehicle (40), **characterized in that** it is intended to be incorporated into an assembly according to any one of claims 1 to 7.

12. A method for using an assembly according to any one of claims 1 to 7, **characterized in that** it includes the following steps:
- transmission, from the ground, of a first long-range signal;
- detection, from onboard, of the first signal transmitted from the ground, indicative of the fact that the contact shoe (41, 42) is over a power supply contact (21, 22) of a recharging system (11, 12);
- commands the lowering of the contact shoe (41, 42) so that it comes into contact with the power supply contact (21, 22);
- transmission, from onboard, of a second short-range signal;
- reception, by the ground, of the second signal, indicative of the placement of a contact shoe (41, 42) in contact with the recharging contact (21, 22);
- command of the ground power contactor (34) and the onboard power contactor (69) allowing the power supply contact (21, 22) to be brought to the power supply potential and the connection of the contact shoe to the onboard energy storage means (45) to begin recharging.

13. The method according to claim 12, further comprising the following steps at the end of recharging:
- commanding the opening of the onboard contactor (69) to electrically isolate the contact shoe (41, 42) from the energy storage means (45);
- stopping the transmission of the second signal transmitted from onboard;
- detecting the end of the transmission of the second signal by the ground and commanding the opening of the power contactor (34) to place the power supply contact (21, 22) at the reference potential;
- detecting that the contact shoe (41, 42) is at the reference potential and commanding the movement of the contact shoe (41, 42) away from the power supply contact (21, 22); and
- allowing the electric vehicle to restart.
